# EUROPEAN PATENT APPLICATION

(11) **EP 1 662 442 A1**
(43) Date of publication of application: **31.05.2006**
(21) Application number: 04027913.5
(22) Date of filing: 24.11.2004
(51) Int. Cl.: G07C 9/00, G07F 19/00

(54) **Activation mechanism of personal financial account**

(71) Applicant: TOPSEED TECHNOLOGY CORP., Chung Ho City, Taipei Hsien, Taiwan (CN)
(72) Inventor: Chen, Shoei-Lai c/o Topseed Technology Corp., Chung Ho City Taipei Hsien Taiwan 235 (CN)
(74) Representative: Urner, Peter

(57) **Abstract**

A device and a method for activating a personal financial account. Two protection mechanisms are facilitated by the device and the method. The personal financial account will be activated only when both the correct personal characteristic and the account information have been input. Access of the personal financial account will be denied if incorrect personal characteristic and the account information have been input.

## Description

### BACKGROUND OF THE INVENTION

The present invention relates in general to an activation mechanism of a personal financial account, and more particularly, to an activation mechanism that has double protection to properly identify the user.

The convenience, the great promotion of credit cards, debit cards, cash cards, and the widely distributed ATM machines have ultimately broadened the applications of plastic money. In addition, many government institutes start to facilitate electronic documentation and application, so as to promote the application of identity verification. As a result, the chip-type electronic storage medium is very likely to be an application medium for identity card in the future.

However, currently, the plastic money such as credit cards, debit card, cash card or identity card is typically applied in the combination with an ATM machined. That is, in application, these cards are inserted into a machine to be read thereby. The machine is often connected to a computer network. After the correct password is input by the user, the financial account or identity is retrieved. The user can thus perform financial transaction or obtain information stored in the card as well as the network. It is known that many people set up the password in a way that is easily remembered thereby. In other words, easily stolen by other people. When the cards are lost or stolen, the protection of the cards is very limited since the password is easily obtained.

### BRIEF SUMMARY OF THE INVENTION

A device for activating personal financial account is provided to overcome the drawbacks of the conventional device. The device includes an activation medium, a financial apparatus, and an input unit. The activation medium pre-stores at least one personal characteristic of an owner thereof. The financial apparatus reads the pre-stored personal characteristic of the activation medium, and the input unit is connected to the financial apparatus for inputting at least one personal characteristic of the owner. The financial apparatus then compares the input personal characteristic to the pre-stored personal characteristic, so as to allow or deny access of a personal account of the owner. The activation medium includes a debit card, a credit card, cash withdraw card, or personal electronic identity card. The personal characteristic includes a physical characteristic of the owner such as a fingerprint, a retina, a voice frequency, a body scent, a DNA of the owner. Preferably, the financial apparatus includes an ATM machine, a deposit book reader, a card reader, or a credit card scanner connected to a computer, cellular phone, a personal data assistant or a smart phone. The preferably comprises an account information input device connected to the financial apparatus. The account information input device allows the user to input a password. The password is pre-stored in the activation medium or the financial apparatus. When the user input an account information, the financial apparatus is operative to compare the input account information with the pre-stored account information.

An activation method of a personal financial account is also provided, in which at least one personal characteristic of a user and an account information are pre-stored and retrieved to compare to input personal characteristic and an account information of the user. When both the input personal characteristic and account information match the pre-stored personal characteristic and account information, the access of the personal account is allowed. Otherwise, the access of the personal account is denied. Similarly, the personal characteristic includes physical characteristic of the user such as fingerprint, retina, voice frequency, body scent or DNA, and the account information includes a pre-selected password.

### BRIEF DESCRIPTION OF THE DRAWINGS

The above objects and advantages of the present invention will be become more apparent by describing in detail exemplary embodiments thereof with reference to the attached drawings in which:
Figure 1 shows a first embodiment of a device for accessing a personal account;
Figure 2 shows another embodiment of the device;
Figure 3 shows another embodiment of the device; and
Figure 4 shows the process flow of a method of accessing a personal account.

### DETAILED DESCRIPTION OF THE INVENTION

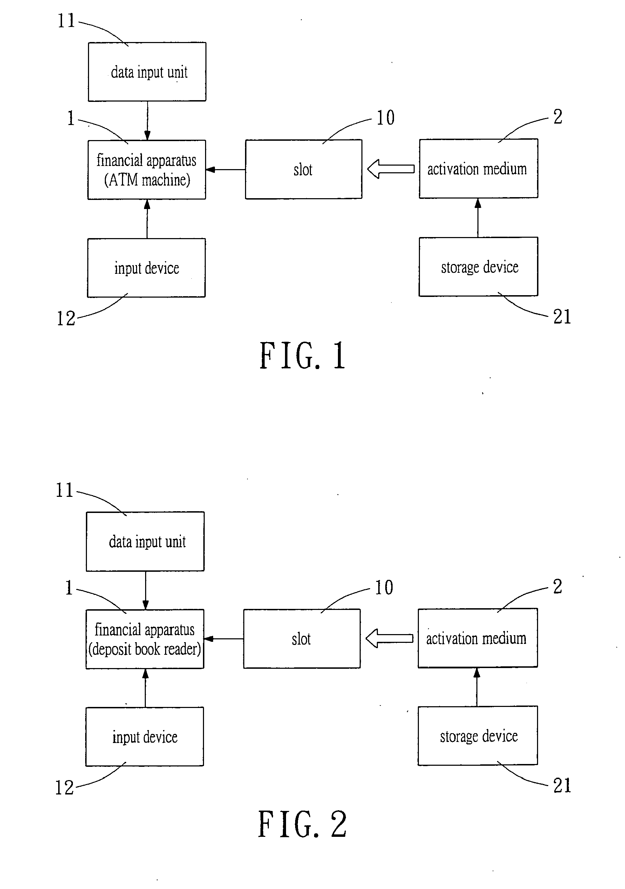

Referring to Figure 1, the activation mechanism for a personal financial account as provided includes an activation medium 2 to connect a financial apparatus 1.

The financial apparatus 1 includes the financial operation machines such as an ATM machine, the deposit book reader, card reader, credit card scanner, for example. The financial apparatus 1 may also include a slot 10 or reading position allowing the activation medium 2 to be inserted for being read.

Preferably, the financial apparatus 1 uses wired or wireless signal communication to install a data input unit 11 allowing the user to input an identification data for activating personal financial activity by the financial apparatus 1. A first protection mechanism is then activated to compare the input identification data and the identification data pre-stored in the activation medium 2, or in both the activation medium 2 and the financial apparatus 1. In this embodiment, the data input unit 11 may include a finger print input device, a retina scanning device, sound (frequency) input device, a body scent input device, a DNA

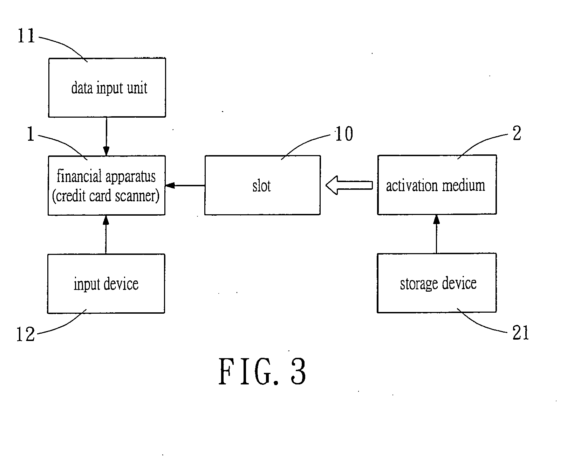

In one embodiment, the financial apparatus 1 includes a credit card scanner that includes an input device 12 as shown in Figures 2 and 3. The financial apparatus 1 can be connected to electronic products such as computers, cellular phones, personal data assistant, and smart phone via networking, so as to perform financial transaction.

The activation medium 2 is made and issued when a person applies an account number in a financial institute. The activation medium pre-stores the above personal identity information allowing the financial institute to identify the user thereof.

In one embodiment, the activation medium 2 is in the form of a thin card such as a debit card, a credit card, a cash withdraw card or a personal identification card. A storage device 21 such as a chip or memory is installed in the activation medium 2 to pre-store not only personal account information and electronic verification, but also stores the personal characteristic as described above, including the fingerprint, the retina, the frequency, the scent and the DNA.

By the application of the above activation medium 2, the activation mechanism of a personal financial activity can be achieved as follows.

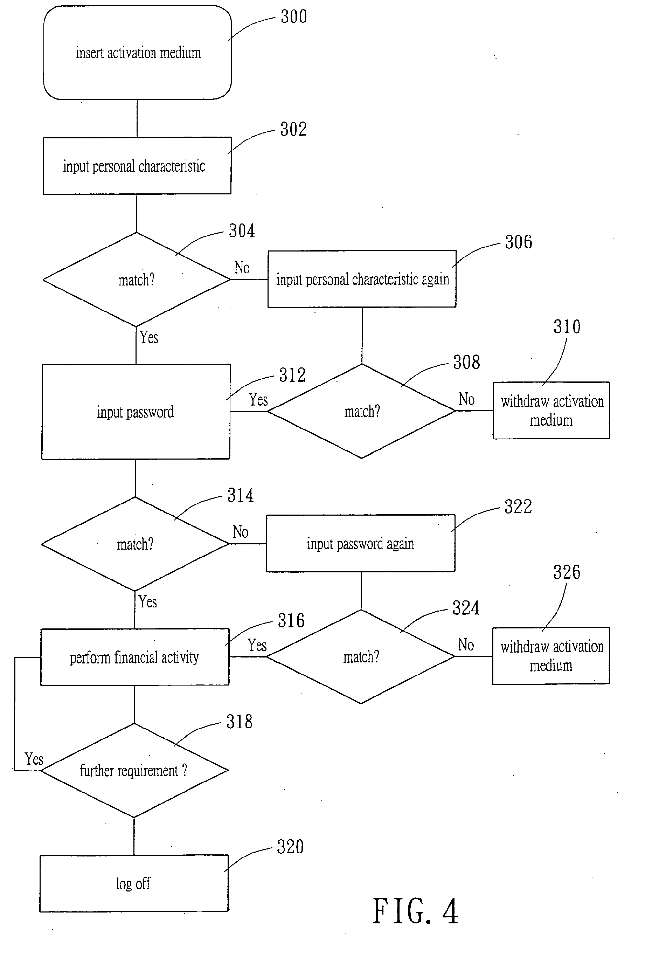

Figure 4 shows a process of using the activation medium 2 to activate the personal financial activity. The activation medium 2 has pre-stored personal characteristics, while the financial apparatus 1 includes a data input unit 11 allowing the user to input the personal characteristics.

In step 300, the activation medium 2 is inserted into the slot 10 of the apparatus 2 to be read thereby. The personal characteristic pre-stored in the activation medium 2 is then retrieved by the financial apparatus 2.

The user then input the personal characteristic into the financial apparatus 1 via the data input unit 11 in step 302. The financial apparatus 1 then compares the personal characteristics retrieved from the activation medium 2 to the input personal characteristic in step 304. Thereby, the first protection mechanism is provided to prevent people other than the owner of the activation medium 2 to access the personal financial account.

If mismatch occurs in step 304, the user is required to input the personal characteristic again in step 306. The financial apparatus 1 then compares again the characteristics retrieved from the activation medium 2 to the input personal characteristic in step 308. If the input personal characteristic still does not match the pre-stored personal characteristic, the activation medium 2 will be withdrawn in step 310; otherwise, step 312 is performed as described below.

When the input personal characteristic matches the pre-stored personal characteristic, the second protection mechanism is activated. In the second protection mechanism, a password is pre-set and stored in either the activation medium 2, the financial apparatus 1, or the database of the financial institute that issues the activation medium 2. In this embodiment, a password input device 12 is installed in the financial apparatus 1 allowing the user to input the password in step 312. The financial apparatus 1 then performs comparison between the pre-set password and the input password in step 314. Thereby, the second protection mechanism is activated.

When the input password matches the pre-stored password in step 314, the personal account of the user is opened. The user can thus select and perform financial activity such as cash withdraw, bill payment, money transfer, access of account summary, or cash advance of credit card in step 316. When the selected activity is completed, the financial apparatus 1 will enquire whether an additional activity is required in step 318. If additional activity is to be performed, a main page allowing the user to select the required activity is opened in step 318, if not, the account is logged off, and the activation medium 1 is ejected in step 320.

If mismatch occurs in step 314, the financial apparatus will requests the user to input the password again in step 322 and perform comparison again in step 324. If the password matches, the account is opened. If mismatches occur for more than a predetermined number of times, the activation medium 2 may be invalidated or withdrawn by the financial institute through the financial apparatus in step 326. The user will have to apply the reissue of an activation medium.

As the account is open only when both the input personal characteristic and the password match the pre-stored personal characteristic and the password, even if the password set up by the user is easily derived, people other than the users can never get access of the user account.

While the present invention has been particularly shown and described with reference to preferred embodiments thereof, it will be understood by those of ordinary skill in the art the various changes in form and details may be made therein without departing from the spirit and scope of the present invention as defined by the appended claims.

## Claims

1. A device for activating personal financial account, comprising:
an activation medium, pre-storing at least one personal characteristic of an owner thereof;
a financial apparatus, to read the pre-stored personal characteristic of the activation medium; and
an input unit connected to the financial apparatus for inputting at least one personal characteristic of the owner; wherein
the financial apparatus is operative to compare the input personal
characteristic and the pre-stored personal characteristic, so as to allow or deny access of a personal account of the owner.

2. The device of Claim 1, wherein the activation medium includes a debit card, a credit card, cash withdraw card, or personal electronic identity card.

3. The device of Claim 1, wherein the personal characteristic includes a physical characteristic of the owner.

4. The device of Claim 1, wherein the personal characteristic includes a fingerprint, a retina, a voice frequency, a body scent, a DNA of the owner.

5. The device of Claim 1, wherein financial apparatus includes an ATM machine, a deposit book reader, a card reader, or a credit card scanner.

6. The device of Claim 5, wherein the financial apparatus is connected to a computer, cellular phone, a personal data assistant or a smart phone.

7. The device of Claim 1, comprising an account information input device connected to the financial apparatus.

8. The device of Claim 7, wherein the account information input device allows the user to input a password.

9. The device of Claim 7, wherein the activation medium or the financial apparatus pre-stores the account information.

10. The device of Claim 9, wherein the financial apparatus is operative to compare the input account information with the pre-stored account information.

11. An activation method of a personal financial account, comprising:
pre-storing at least one personal characteristic of a user;
reading the personal characteristic;
inputting a personal characteristic to access the personal financial account; comparing the input personal financial account to the pre-stored personal characteristic;
setting up and pre-storing an account information of the user;
reading the account information of the user;
inputting an account information;
comparing the input account information with the pre-stored account information; and
allowing access of the personal financial account only when both the input account information and personal characteristic match the pre-stored account information and personal characteristic.

12. The method of Claim 11, further comprising providing an activation medium for pre-storing the personal characteristic.

13. The method of Claim 11, wherein the personal characteristic includes physical characteristic of the user.

14. The method of Claim 11, wherein the personal characteristic includes a fingerprint, a retina, a voice frequency, a body scent or a DNA.

15. The method of Claim 11, further comprising providing a financial apparatus for reading the pre-stored personal characteristic.

16. The method of Claim 11, wherein the account information includes a password.

17. The method of Claim 11, further comprising a step of denying access of the personal financial account when the input personal characteristic mismatches the pre-stored personal characteristic.

18. The method of Claim 11, further comprising a step of denying access of the personal financial account when the input account information mismatches the pre-stored account information for at least a predetermined number of times.

19. An activation mechanism of a personal account of a user, comprising:
identifying a personal characteristic of the user;
identifying an account information of the personal account;
allowing access of the personal account only when the identified personal characteristic and account information are correct.

20. The mechanism of Claim 19, wherein the personal characteristic includes a physical characteristic of the user, and the account information includes a password pre-set by the user or an financial institute issuing the personal financial account.
